# EUROPÄISCHE PATENTANMELDUNG

(11) **EP 4 794 187 A1**
(43) Veröffentlichungstag der Anmeldung: **19.08.2026**
(21) Anmeldenummer: 25157664.1
(22) Anmeldetag: 13.02.2025
(51) Int. Cl.: H02P 3/22, A47J 43/00

(54) **KÜCHENMASCHINE UND VERFAHREN ZUM BETRIEB DES ELEKTROMOTORS EINER KÜCHENMASCHINE**

(71) Anmelder: Vorwerk & Co. Interholding GmbH, 42275 Wuppertal (DE)
(72) Erfinder: SEIBT, Patrick, 40789 Monheim am Rhein (DE); ARNDT, Simon, 42929 Wermelskirchen (DE); HAUNSCHILD, Felix, 45133 Essen (DE)
(74) Vertreter: Von Rohr Patentanwälte Partnerschaft mbB

(57) **Zusammenfassung**

Die vorliegende Erfindung betrifft ein Verfahren zum Betrieb eines Elektromotors einer Küchenmaschine und eine Küchenmaschine, wobei ein Rotor des Elektromotors zum Antrieb eines Werkzeugs der Küchenmaschine mit diesem Werkzeug gekoppelt ist, um es in Rotation zu versetzen, und wobei der Elektromotor mindestens drei Phasen aufweist, durch die Elektromagnete des Elektromotors über eine Motorsteuerung mit Strom versorgbar sind, um den Rotor anzutreiben, und der Rotor gebremst wird, indem die Motorsteuerung bei Empfang eines Bremstriggersignals die Phasen miteinander kurzschließt.

## Beschreibung

Die vorliegende Erfindung betrifft ein Verfahren zum Betrieb des Elektromotors einer Küchenmaschine. Der Elektromotor ist vorzugsweise Teil eines Antriebs für ein Rührwerk einer elektrisch betriebenen Küchenmaschine. Ferner betrifft die vorliegende Erfindung eine Küchenmaschine.

Insbesondere betrifft die vorliegende Erfindung den Betrieb eines Elektromotors einer Küchenmaschine zum Durchführen eines Zubereitungsvorgangs durch Erhitzen, Zerkleinern und/oder Mischen zur Herstellung eines Produkts, wie einer Speise oder eines Zwischenprodukts, in einem Zubereitungsgefäß wie einem Topf.

Der Elektromotor weist mindestens zwei und vorzugsweise mindestens drei Phasen auf, durch die Elektromagnete des Elektromotors über eine Motorsteuerung steuerbar bzw. mit Strom versorgbar sind, um einen Rotor des Elektromotors anzutreiben, also in Drehung zu versetzen.

Der Elektromotor ist vorzugsweise ein Drehfeldmotor, insbesondere ein BLDC oder elektrisch kommutierter Synchronmotor. Dies hat sich als vorteilhaft für die Antriebscharakteristik, insbesondere bei Küchenmaschinen, erwiesen, ist jedoch vorzugsweise nicht zwingend.

In dem Zubereitungsgefäß ist ein Werkzeug, vorzugsweise ein Rührer oder Messer, angeordnet. Der Elektromotor ist so mit dem Werkzeug gekoppelt, dass das Werkzeug durch den Elektromotor bzw. dessen Rotor in Rotation versetzt wird oder werden kann.

Besonders bevorzugt handelt es sich um eine Küchenmaschine, die gespeicherte Rezepte bereitstellt und ein zumindest teil-automatisiertes Durchführen von mehreren Schritten eines Rezeptes unterstützt.

Grundsätzlich kann die vorliegende Erfindung jedoch auch in anderen Küchengeräten, wie Mixern, Haushaltsgeräten oder weiteren technischen Bereichen, eingesetzt werden und vorteilhaft sein, sodass die Erfindung zwar im Kontext der in Rede stehenden Küchenmaschinen besonders vorteilhaft, jedoch nicht hierauf beschränkt ist.

Unter der Steuerung des Elektromotors ist bevorzugt die Versorgung mit Strom zur Erzeugung einer Rotorbewegung, also der Drehung eines antreibbaren Rotors, des Elektromotors zu verstehen. Insbesondere ist die Motorsteuerung zur Regelung einer Rotordrehzahl und/oder Rotorposition des Elektromotors bzw. seines Rotors ausgebildet. Die Motorsteuerung im Sinne der vorliegenden Erfindung kann jedoch auch eine sonstige Steuerung bzw. Betriebsmodi des Elektromotors bewirken.

Die EP 3 705 006 A1 betrifft eine Küchenmaschine zum Durchführen eines Speisenzubereitungsvorgangs mit einem Elektromotor zum Antrieb eines Rührers mit einem Drehmoment und einer Drehzahl, die von dem Motorstrom zum Betreiben des Elektromotors abhängen. Die Küchenmaschine umfasst ein Display zum Anzeigen eines Hinweises und ein Betätigungselement zum Betätigen einer Benutzerschnittstelle durch einen Benutzer.

Übliche Motorsteuerungen von Küchenmaschinen bremsen den Antrieb bedarfsweise durch Abschalten der Stromversorgung. Es hat sich gezeigt, dass dies nur zu einer allmählichen Reduktion der Drehzahl führt, insbesondere ausgehend von hohen Drehzahlen. Daher sind, insbesondere bei höheren Drehzahlen des Elektromotors bzw. Werkzeugs, Sicherheitsmechanismen wie eine Verriegelung und Sicherung gegen manuellen Zugriff zum Innenraum des Zubereitungsgefäßes vorzusehen. Dies stellt sich zuweilen als unkomfortabel heraus, da eine Wartezeit verstreichen muss, bis Zugriff auf den Innenraum gewährt werden kann. Ferner kann ein Auslaufen des rotierenden Werkzeugs dazu führen, dass die Bearbeitung des Produkts zu lange oder zu intensiv erfolgt.

Eine Aufgabe der vorliegenden Erfindung ist es vor diesem Hintergrund, ein Verfahren zum Betrieb eines Elektromotors einer Küchenmaschine und eine Küchenmaschine anzugeben, wodurch eine komfortablere Handhabung und präzisere Verarbeitung des Produkts ermöglicht wird.

Diese Aufgabe wird durch ein Verfahren gemäß Anspruch 1, eine Küchenmaschine gemäß Anspruch 14 oder ein Computerprogrammprodukt gemäß Anspruch 15 gelöst. Vorteilhafte Weiterbildungen sind Gegenstand der Unteransprüche.

Vorschlagsgemäß wird der Rotor gebremst, indem die Motorsteuerung bei Empfang eines Bremstriggersignals die Phasen miteinander kurzschließt. Insbesondere wird bei dem vorschlagsgemäßen Verfahren also ein Bremstriggersignal empfangen und daraufhin der Rotor gebremst, indem die Phasen miteinander kurzgeschlossen werden.

In überraschender Weise hat sich herausgestellt, dass dies ein schnelles Abbremsen ermöglicht. Hierdurch wird ein schneller Zugriff auf das Zubereitungsgefäß ermöglicht. Entsprechend kann mit Zeitersparnis in einem Rezept oder Programm der nächste Schritt bearbeitet werden oder das Zubereitungsgefäß wieder freigegeben werden. Die Erfindung erfordert hierbei keine Rückspeisung von Energie in den Zwischenkreis, wodurch eine erhöhte Betriebssicherheit bzw. ein Schutz elektronischer Komponenten erreicht wird.

Zudem ist die Erfindung auch in Fällen anwendbar, wenn die Geräteelektronik nicht rückspeisefähig fähig ist. Wenn also insbesondere der PFC oder eine sonstige, die Zwischenkreisspannung bereitstellende Komponente nicht dazu ausgebildet ist, Energie vom Elektromotor aufzunehmen und ggf. in das öffentliche Stromnetz zurückzuspeisen.

Die Erfindung bietet damit eine verbesserte Bremswirkung auch in den Fällen, in denen aufwendigere rückspeisefähige Systeme nicht zur Verfügung stehen. Zudem reicht im Zwischenspannungskreis ein kleiner Energiespeicher, der zur Glättung der Zwischenkreisspannung, aber nicht zur Aufnahme von Energie des Elektromotors im Generatorbetrieb geeignet ist.

Die Erfindung ermöglicht somit eine ressourcenschonende Konstruktion der Küchenmaschine bei gleichzeitig schneller Reaktionsfähigkeit bezüglich eines schnellen Abbremsens des Rotors bzw. Werkzeugs.

Ein weiterer, auch unabhängig realisierbarer Aspekt der vorliegenden Erfindung betrifft eine Küchenmaschine, wobei die Küchenmaschine zur Durchführung des vorschlagsgemäßen Verfahrens ausgebildet ist.

Die Küchenmaschine weist hierbei einen Elektromotor auf, wobei ein Rotor des Elektromotors zum Antrieb eines Werkzeugs der Küchenmaschine mit diesem gekoppelt ist, um es in Rotation zu versetzen, und wobei der Elektromotor mindestens drei Phasen aufweist, durch die Elektromagnete des Elektromotors über eine Motorsteuerung mit Strom versorgbar sind, um den Rotor anzutreiben, wobei diese Phasen kurzgeschlossen werden.

Ein weiterer, auch unabhängig realisierbarer Aspekt der vorliegenden Erfindung betrifft ein Computerprogrammprodukt aufweisend Programmcodemittel, die, wenn sie ausgeführt werden, bei einer vorschlagsgemäßen Küchenmaschine das vorschlagsgemäße Verfahren ausführen. Hierzu kann die Küchenmaschine bzw. die Motorsteuerung einen Prozessor zur Ausführung der Programmcodemittel aufweisen.

Ein weiterer, auch unabhängig realisierbarer Aspekt der vorliegenden Erfindung betrifft eine Verwendung einer Bremsung eines Rotor eines Elektromotors, vorzugsweise eines Drehfeldmotors, insbesondere eines BLDC oder elektrisch kommutierten Synchronmotors, einer Küchenmaschine,
wobei der Elektromotor mindestens drei Phasen aufweist, durch die durch Spulen gebildete Elektromagnete des Elektromotors über eine Motorsteuerung versorgbar sind, um den Rotor anzutreiben,
wobei die Bremsung in Abhängigkeit von einem Vorhandensein oder einer Bauform eines Zubereitungsgefäßes und/oder vom Vorhandensein oder einer Erkennung eines Zubehörteils und/oder vom Vorhandensein und/oder einer Aktivität eines Funktionsmoduls der Küchenmaschine erfolgt, und
wobei die Bremsung durch Kurzschluss der Phasen erfolgt, insbesondere in Reaktion auf den Empfang eines Bremstriggersignals.

Ein Antrieb für ein Rührwerk im Sinne der vorliegenden Erfindung ist eine Einrichtung, die dazu geeignet, ausgebildet und/oder eingesetzt wird oder ist, ein Werkzeug in Bewegung, insbesondere Rotation, zu versetzen, damit dieses auf ein Produkt bearbeitend einwirken kann. Der Antrieb weist hierzu zumindest den Elektromotor und die Motosteuerung auf.

Ein Rührwerk im Sinne der vorliegenden Erfindung weist den Antrieb und das hiermit antreibbare Werkzeug, insbesondere ein Messer oder Rührer, auf. Der Antrieb weist hierzu den Elektromotor auf, dessen Rotor mit dem Werkzeug bzw. Rührer mechanisch und bevorzugt drehfest gekoppelt ist, sodass sich eine Drehung des Rotors des Elektromotors unmittelbar oder mittelbar auf das Werkzeug überträgt, insbesondere über eine Welle.

Eine Motorsteuerung im Sinne der vorliegenden Erfindung ist vorzugsweise eine elektronische Komponente zur Erzeugung einer Stellgröße, die den Elektromotor ansteuert bzw. betreibt. Die Motorsteuerung kann hierzu Phasen- bzw. Strangströme steuern, bevorzugt, indem Schalter Phasen bzw. Stränge des Elektromotors mit einer Versorgungsspannung oder Masse verbinden oder sie hiervon trennen. Zu diesem Zweck kann die Motorsteuerung einen Wechselrichter wie eine Motorbrückenschaltung mit Schaltern aufweisen, um die jeweilige Phase bzw. den jeweiligen Strang mit einem Versorgungsspannungs- oder Masseknoten zu verbinden.

Die Motorsteuerung kann vorzugsweise auf Basis eines Vergleichs eines Ist-Betriebsparameters (Regelgröße), der den aktuellen Betriebszustand des Elektromotors charakterisiert, mit einem Soll-Betriebsparameter (Sollwert), der einen vorgegebenen oder vorgebbaren Betriebszustand des Elektromotors charakterisiert, den Elektromotor bzw. die Strang- bzw. Phasenströme regeln. Die Motorsteuerung ist damit vorzugsweise zur Regelung des Betriebszustands des Elektromotors ausgebildet und eingerichtet. Hierzu steuert die Motorsteuerung die Schalter entsprechend an.

Die Motorsteuerung kann, abgesehen von einer solchen Regelung, die Schalter jedoch auch vorschlagsgemäß derart schalten, dass die Phasen kurzgeschlossen werden, was vorzugsweise keiner Regelung bedarf bzw. ohne zu regeln, also ohne Sollwert-Istwert-Vergleich. Bei dem Schalten der Schalter zur Erzeugung des Kurzschlusses der Phasen handelt es sich also vorzugsweise um eine Steuerung ohne Feedback. Hierzu kann die Motorsteuerung ein Bremstriggersignal empfangen, woraufhin die Motorsteuerung den Kurzschluss der Phasen bewirkt.

Ein Bremstriggersignal im Sinne der vorliegenden Erfindung kann ein extern oder intern erzeugtes Signal sein, das das Verhalten der Motorsteuerung so beeinflusst, dass die Motorsteuerung den Kurzschluss der Phasen bewirkt. Im Folgenden impliziert die Erzeugung des Bremstriggersignals dessen Übermittlung an die Motorsteuerung bzw. den Empfang durch die Motorsteuerung, auch wenn die Übermittlung die Motorsteuerung nicht explizit erwähnt.

Die Motorsteuerung kann einen entsprechenden Eingang zum Empfang des Bremstriggersignals aufweisen oder das Bremstriggersignal kann über vorhandene Schnittstellen empfangen werden, über die die Motorsteuerung beispielsweise auch Betriebsparameter empfängt.

Das Bremstriggersignal kann alternativ oder zusätzlich durch die Motorsteuerung selbst erzeugt werden, beispielsweise auf Basis ihr übergebener, sonstiger Parameterwerte gebildet werden, was im Sinne der vorliegenden Erfindung vorzugsweise ebenfalls als (mittelbarer) Empfang des Bremstriggersignals gilt.

Bevorzugt wird das Bremstriggersignal basierend auf einem Zustand der Küchenmaschine gebildet. Der Zustand kann mit einem oder mehreren Sensoren der Küchenmaschine ermittelt werden.

Beispielsweise kann das Bremstriggersignal basierend auf einer Detektion einer Manipulation an Sicherheitseinrichtungen wie einer Abdeckung des Zubereitungsgefäßes oder einer Sicherung zur Sicherung des Zubereitungsgefäßes erzeugt werden.

Alternativ oder zusätzlich kann das Bremstriggersignal basierend auf Motorbetriebsparametern wie einer Drehzahl, einem Drehmoment, einer Position des Rotors/Werkzeugs oder hierzu korrespondierenden Größen erzeugt werden. Insbesondere kann ein Motorstrom wie ein oder mehrere Phasenströme oder Strangströme verwendet werden, um das Bremstriggersignal zu erzeugen. So ist es möglich, den Motorstrom zu überwachen und wenn ein Prüfkriterium wie eine Stromschwelle erreicht wird oder ist, das Bremstriggersignal (automatisch) zu erzeugen.

Das Bremstriggersignal kann auch Teil eines auf der Küchenmaschine ausgeführten Programms oder Rezepts oder durch manuelle Eingabe über eine Benutzerschnittstelle erzeugt werden.

Ein Betriebszustand des Elektromotors ist oder korrespondiert vorzugsweise zu einer Drehzahl (insbesondere Rotordrehzahl) und/oder einem Drehmoment (insbesondere am Rotor) und/oder zu einer Position des Rotors des Elektromotors. Im Folgenden wird die Rotordrehzahl oder hierzu korrespondierende Drehzahl des Werkzeugs auch kurz Drehzahl bzw. das Drehmoment am Rotor oder korrespondierend hierzu am Werkzeug auch kurz Drehmoment genannt, sodass diese Begriffe synonym und austauschbar sind, wenn sich aus dem Zusammenhang nichts Gegenteiliges ergibt.

Weitere Aspekte der vorliegenden Erfindung ergeben sich aus den Ansprüchen sowie der folgenden Beschreibung bevorzugter Ausführungsbeispiele anhand der Zeichnung. Es zeigen:
- Fig. 1: eine perspektivische Ansicht eines vorschlagsgemäßen Elektromotors;
- Fig. 2: eine Schaltungsanordnung, vorzugsweise Motorbrückenschaltung, zur Verbindung und Trennung der Phasen des Elektromotors mit Versorgungsspannung und/oder Masse; und
- Fig. 3: einen schematischen Querschnitt einer vorschlagsgemäßen Küchenmaschine.

In den Figuren werden für dieselben oder ähnliche Teile dieselben oder ähnliche Bezugszeichen verwendet, wobei dieselben oder ähnliche Vorteile und Eigenschaften erreicht werden können, auch wenn von einer wiederholten Beschreibung abgesehen wird.

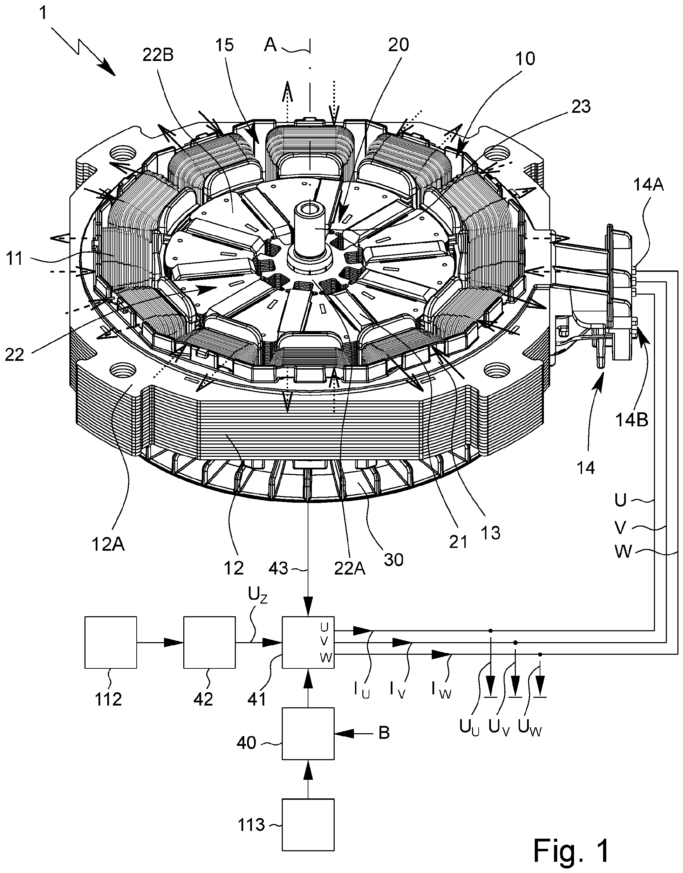

Fig. 1 zeigt einen vorschlagsgemäßen Elektromotor 1 in einer schematischen, perspektivischen Darstellung.

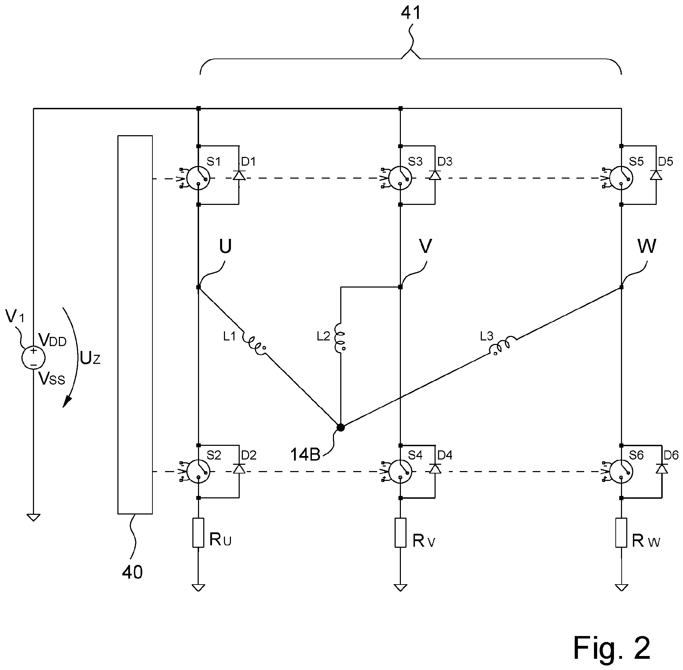

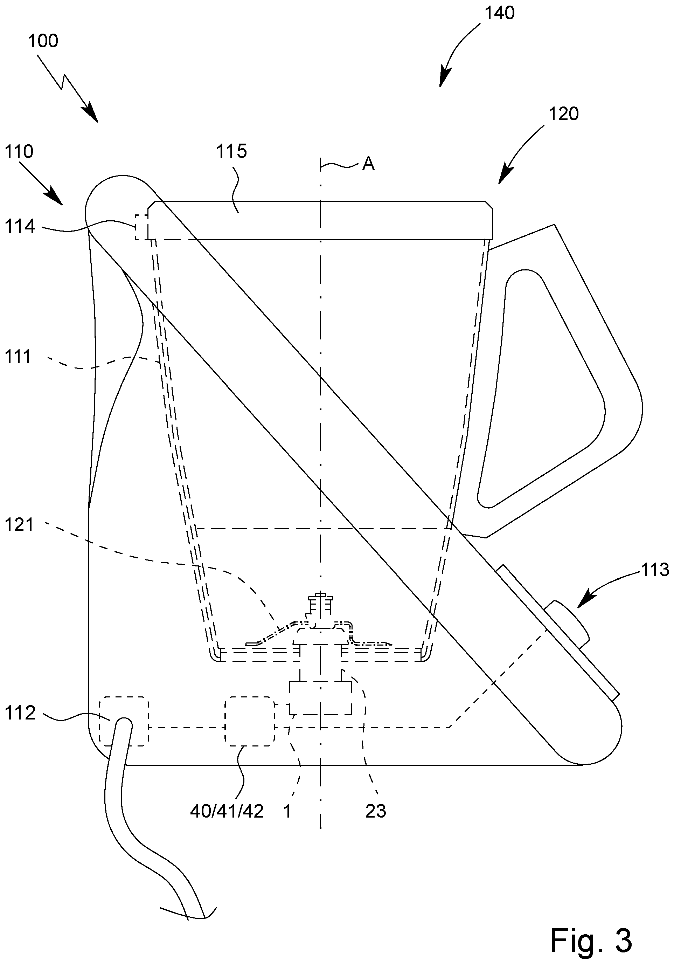

Im Folgenden wird bezugnehmend auf Fig. 1 zunächst der grundsätzliche Aufbau eines besonders bevorzugten Elektromotors 1 erläutert. Der Elektromotor 1 kann mit Ansteuerelektronik aufweisend einen Motorsteuerung 40 betrieben werden, wie in Fig. 2 dargestellt. Der Elektromotor 1 hat sich als vorteilhaft zum Antrieb von Küchenmaschinen 100, wie beispielhaft in Fig. 3 dargestellt, erwiesen. Dies gilt insbesondere mit einem oder mehreren der und besonders einer Kombination von Aspekten der vorliegenden Erfindung. Die Küchenmaschine 100 weist also vorzugsweise den Elektromotor 1 auf. Die Küchenmaschine 100 ist hierbei weiter bevorzugt zur Durchführung des zuvor und im Folgenden erläuterten, vorschlagsgemäßen Verfahrens ausgebildet.

Der Elektromotor 1 kann als Drehfeldmotor, bürstenloser Gleichstrommotor (BLDC-Motor) oder elektrisch kommutierter Permanentmagnet-Synchronmotor (PMSM-Motor) ausgeführt sein. Die vorliegende Erfindung ist jedoch grundsätzlich auch bei Anwendung mit anderen Motoren, vorzugsweise Drehfeld-Motoren und/oder Motoren mit mindestens zwei, vorzugsweise mindestens drei Phasen, vorteilhaft.

Ein Rotor 20 des Elektromotors 1 ist zum Antrieb eines Werkzeugs 121, insbesondere Messers bzw. Rührers, der Küchenmaschine 100 mit dem Werkzeug 121 gekoppelt, um das Werkzeug 121 in Rotation zu versetzen.

Der Elektromotor 1 weist mindestens drei Phasen U, V, W auf, durch die Elektromagnete bzw. Spulen 11 des Elektromotors 1 über die Motorsteuerung 40 mit Strom I_{U}, I_{V}, I_{W} versorgbar sind, um den Rotor 20 anzutreiben. Grundsätzlich können auch vier Phasen, fünf Phasen, sechs Phasen oder mehr als sechs Phasen vorgesehen sein.

Der Elektromotor 1 gemäß Fig. 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Begriffe wie "axial", "radial" und dergleichen beziehen sich vorzugsweise auf die Rotationsachse A.

Optional kann der Elektromotor 1 ein Gehäuse aufweisen bzw. können Stator 10 und/oder Rotor 20 in einem Gehäuse angeordnet sein (nicht dargestellt).

Beim Darstellungsbeispiel ist der Elektromotor 1 als Innenläufer-Motor ausgebildet bzw. ist der Rotor 20 zumindest teilweise innerhalb des Stators 10 angeordnet.

Der Stator 10 weist mehrere, hier zwölf, Wicklungen/Spulen 11, einen Statorkern 12, einen Spulenträger 13 und/oder eine Anschlusseinrichtung 14 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte, wobei jede Wicklung/Spule 11 um einen Spulenabschnitt/Statorzahn gewickelt ist und/oder sich jeweils ein Spulenabschnitt/Statorzahn durch eine Spule 11 hindurch erstreckt.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1, insbesondere die Spulen 11, angeschlossen werden, insbesondere wie in Fig. 1 mit Pfeilen an den Spulen 11 angedeutet.

Die Anschlusseinrichtung 14 weist vorzugsweise einen elektrischen Anschluss bzw. elektrische Anschlusskontakte 14A auf. Die Anschlusseinrichtung 14 weist im Darstellungsbeispiel jeweils ein Anschlusskontakt 14A für Phasen U, V, W auf, korrespondierend zu den Phasen U, V, W.

Vorzugsweise sind die Spulen 11 so miteinander verschaltet, dass pro Phase U, V, W jeweils eine Spulengruppe gebildet wird. Beim Darstellungsbeispiel bzw. dreiphasig betriebenen Elektromotor 1 werden also vorzugsweise drei Spulengruppen korrespondierend zu den drei Phasen U, V, W gebildet. Insbesondere sind beim Darstellungsbeispiel mit zwölf Spulen 11 jeweils vier Spulen 11 je einer Phase U, V, W zugeordnet. Dies ist mittels der unterschiedlichen Pfeile (z.B. durchgezogene Pfeile für Phase U, gestrichelte Pfeile für Phase V und gepunktete Pfeile für Phase W) an den Spulen 11 in Fig. 1 angedeutet.

Zu den jeweiligen Phasen U, V, W korrespondieren Phasenströme I_{U}, I_{V}, I_{W} und Phasenspannungen U_{U}, U_{U}, U_{W}, wobei die Phasenströme I_{U}, I_{V}, I_{W} vorzugsweise mit Shunts R_{U}, R_{V}, R_{W} an den Anschlusskontakten 14A bzw. in den Pfaden des Wechselrichters 41 für die jeweilige Phase U, V, W messbar sind und Phasenspannungen U_{U}, U_{U}, U_{W} an den Anschlusskontakten 14A abgegriffen werden können.

Die elektrischen Anschlusskontakte 14A sind vorzugsweise durch eine oder mehrere Klemmen, insbesondere Schneidklemmen, gebildet oder weisen diese auf.

An jedem Kontakt 14A bzw. jeder Klemme kann vorzugsweise eine unterschiedliche Spannung angelegt werden, insbesondere so, dass die verschiedenen Spulendrähte und zugehörigen Spulen 11 unterschiedlich angesteuert werden können.

Die Anzahl der Kontakte 14A bzw. Klemmen kann je nach Anzahl der verschiedenen Spulendrähte und/oder abhängig von der Verschaltung der Spulendrähte bzw. der Spulen 11 variieren. Beim Darstellungsbeispiel weist die Anschlusseinrichtung 14 vorzugsweise drei elektrische Anschlusskontakte 14A bzw. Klemmen auf.

Vorzugsweise weist die Anschlusseinrichtung 14 einen Sternpunkt 14B zur Verschaltung der Spulendrähte bzw. der Spulen 11 auf. Insbesondere sind die Spulen 11 in einer Sternschaltung miteinander verschaltet. Hierunter ist vorzugsweise zu verstehen, dass die unterschiedlichen Spulendrähte der unterschiedlichen (Gruppen von) Spulen 11, insbesondere an Enden der Spulendrähte, miteinander verbunden sind.

Vorzugsweise bildet jeder Spulendraht mit seinem einen Ende einen elektrischen Anschlusskontakt 14A bzw. ist mit einer entsprechenden Klemme elektrisch verbunden und ist mit seinem anderen Ende zum Sternpunkt 14B verbunden.

Beim Darstellungsbeispiel werden vorzugsweise drei (Enden der) Spulendrähte zu einem Sternpunkt 14B miteinander verschaltet.

Die Anschlusseinrichtung 14 weist vorzugsweise, insbesondere zusätzlich zu der/den Klemme(n) für die Anschlusskontakte 14A, eine weitere Klemme, insbesondere eine Schneidklemme, zur Bildung des Sternpunkts 14B auf.

Alternativ zur Klemme kann der Sternpunkt 14B auch dadurch gebildet werden, dass die entsprechenden Enden der Spulendrähte miteinander verlötet oder verschweißt oder anderweitig miteinander elektrisch verbunden werden.

Beim Darstellungsbeispiel weist der Rotor 20 vorzugsweise mehrere, hier zehn, Permanentmagnete 21, einen Rotorkern 22, eine Welle 23 und/oder einen Lüfter 30, insbesondere ein Lüfterrad, auf.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden.

Der Rotorkern 22 umfasst vorzugsweise mehrere, hier zehn, Sektorsegmente bzw. Sektorabschnitte 22B, wobei zwischen zwei benachbarten Sektorabschnitten 22B jeweils ein Permanentmagnet 21 aufgenommen ist. Insbesondere sind die Permanentmagnete 21 seitlich bzw. in Umfangsrichtung jeweils von zwei Sektorabschnitten 22B begrenzt.

Vorzugsweise umfasst der Rotorkern 22 mehrere gestapelte Elektrobleche bzw. Rotorbleche 22A oder ist daraus gebildet. Die Rotorbleche 22A sind entsprechend geformt bzw. gestanzt, um die Sektorabschnitte 22B des Rotorkerns 22 zu realisieren.

Der Lüfter 30 ist vorzugsweise an der Welle 23 befestigt, insbesondere kraft-, form- und/oder stoffschlüssig. Zusätzlich oder alternativ kann der Lüfter 30 an dem Rotorkern 22 befestigt sein, insbesondere kraft-, form- und/oder stoffschlüssig. Auch ist es möglich, dass der Lüfter 30 an den Rotorkern 22 und/oder die Welle 23 angespritzt ist.

In Fig. 1 sind am Elektromotor 1 mit Pfeilen den Phasen U, V, W zugeordnete Phasenströme I_{U}, I_{V}, I_{W} angedeutet. Der Elektromotor 1 im Darstellungsbeispiel wird dreiphasig betrieben. Dies ist bevorzugt, jedoch nicht zwingend der Fall. Insbesondere kann der Elektromotor 1 auch einphasig oder mit mehr Phasen betreibbar sein oder betrieben werden.

Der Elektromotor 1 kann mit einer Motorsteuerung 40 gesteuert bzw. geregelt sein oder werden. Im Darstellungsbeispiel steuert die Motorsteuerung 40 einen Wechselrichter 41 oder weist den Wechselrichter 41 auf, mit dem der Elektromotor 1 elektrisch verbunden ist und/oder versorgt wird.

Der Wechselrichter 41 stellt an den Phasen U, V, W Phasenströme I_{U}, I_{V}, I_{W} und Phasenspannungen U_{U}, U_{U}, U_{W} zum Betrieb des Elektromotors 1 bereit. Es versteht sich, dass Phasenströme I_{U}, I_{V}, I_{W} und Strangströme ineinander umgerechnet werden können. Diese Begriffe sind daher synonym zu verstehen und können durch einander ersetzt werden, wobei im Folgenden der Übersichtlichkeit halber von Phasenströmen I_{U}, I_{V}, I_{W} die Rede ist.

Der Wechselrichter 41 wird vorzugsweise mit einer Betriebsspannung versorgt und wandelt diese, gesteuert durch die Motorsteuerung 40, in die Phasenströme I_{U}, I_{V}, I_{W} und Phasenspannungen U_{U}, U_{V}, U_{W}. Die Betriebsspannung ist vorzugsweise eine Gleichspannung. Die Betriebsspannung, auch Zwischenkreisspannung U_{Z} genannt, wird vorzugsweise über eine Power-Factor-Correction-Schaltung 42 (PFC) bereitgestellt, die eine Netzspannung in eine Gleichspannung wandelt.

Die Power-Factor-Correction-Schaltung 42 (PFC) kann einerseits die Blindleistung reduzieren und andererseits dafür sorgen, dass die Stromaufnahme möglichst sinusförmig ist. Dies verbessert die Effizienz, reduziert Netzverluste und erfüllt gesetzliche Vorgaben zur Netzqualität. Insbesondere handelt es sich um eine aktive PFC-Schaltung, da diese besonders effektiv und anpassungsfähig sind.

Die Betriebsspannung kann auch mittels eines Gleichrichters o. dgl. aus einer Notspannung gewandelt sein oder werden oder auch von einem Akkumulator oder sonstigen Energiespeicher stammen.

Die Motorsteuerung 40 greift vom Elektromotor 1 vorzugsweise ein oder mehrere Sensorsignale 43 ab und regelt die Phasenströme I_{U}, I_{V}, I_{W} und Phasenspannungen U_{U}, U_{V}, U_{W} auf dieser Basis.

Bei dem Sensorsignal 43 handelt es sich beispielsweise um die Rotorposition bzw. Sensorwerte, die mit einem oder mehreren Encodern, Resolvern, Hall-Sensoren oder anderen Sensoren des Elektromotors 1 gebildet werden oder sind. Alternativ oder zusätzlich handelt es sich um Sensorwerte bezogen auf die Phasen U, V, W (Spannungsmessergebnisse und/oder Strommessergebnisse, insbesondere ermittelt per Shuntmessung der Phasen U, V, W).

Das Sensorsignal 43 kann insbesondere eine absolute Rotorposition, einen oder mehrere Strangströme, eine Zwischenkreisspannung U_{Z} und/oder eine Motortemperatur repräsentieren und/oder die Regelung mit der Motorsteuerung 40 basiert auf einem oder mehreren dieser Sensorsignale 43. Die Motorsteuerung 40 synchronisiert die Phasenströme I_{U}, I_{V}, I_{W} und Phasenspannungen U_{U}, U_{V}, U_{W} vorzugsweise mit dem Sensorsignal 43.

Bei der Regelung kann die Motorsteuerung 40 Parameter, wie ein Massenträgheitsmoment, Spulenwiderstände, Induktivitäten und/oder eine Flussverkettung der Permanentmagnete 21, zugrunde legen oder berücksichtigen oder die Motorsteuerung 40 ist dazu ausgebildet.

Fig. 2 zeigt eine Schaltungsanordnung, die vorzugsweise die Motorsteuerung 40 und den Wechselrichter 41 umfasst, während die Spannungsversorgung 112 durch eine Spannungsquelle V1 angedeutet ist, die insbesondere die Zwischenkreisspannung U_{Z} repräsentiert bzw. bereitstellt. Der Elektromotor 1 ist durch die durch seine Spulen 11 erzeugten Wicklungsinduktivitäten L₁, L₂, L₃ angedeutet.

Die im Zusammenhang mit Fig. 1 erläuterten Spulen 11 des Elektromotors 1, die jeweils die Phasen U, V, W miteinander oder mit dem Sternpunkt 14B verbinden, sind in Fig. 2 zusammenfassend als Wicklungsinduktivitäten L₁, L₂, L₃ repräsentiert, die die zwischen den Phasen U, V, W und dem Sternpunkt 14B verschalteten Spulen 11 darstellen. Die Erfindung kann jedoch auch auf andere Elektromotoren 1 angewandt werden, insbesondere auch Elektromotoren 1 in Dreieckschaltung ohne Sternpunkt 14B.

Der Wechselrichter 41 ist vorzugsweise als Brückenschaltung bzw. Motorbrücke ausgeführt. Der Wechselrichter 41 ist vorzugsweise dazu ausgebildet, die Phasen U, V, W mit Strom zu versorgen, insbesondere durch Herstellen einer elektrischen Verbindung mit der Zwischenkreisspannung U_{Z}, und (alternativ) die Phasen U, V, W kurzzuschließen, wodurch die vorschlagsgemäße Bremsung des Rotors 20 erfolgen kann.

Die Spannungsquelle V1 im Darstellungsbeispiel repräsentiert vorzugsweise den Ausgang einer Schaltung, insbesondere der Power-Factor-Correction-Schaltung 42, die die Zwischenkreisspannung U_{Z} zur Verfügung stellt.

Es ist vorzugsweise vorgesehen, dass der Wechselrichter 41 für die jeweiligen Phasen U, V, W ein Leistungsschalterpaar S₁+S₂, S₃+S₄, S₅+S₆ aufweist. Jedes der Leistungsschalterpaare S₁+S₂, S₃+S₄, S₅+S₆ ist gebildet durch einen ersten Leistungsschalter S₁, S₃, S₅, durch den die jeweilige Phase U, V, W mit einem ersten Pol V_{DD} der Zwischenkreisspannung U_{Z} bzw. Spannungsquelle V1 (mit einem ersten Potenzial) koppelbar ist, und durch einen vom ersten unterschiedlichen, zweiten Leistungsschalter S₂, S₄, S₆, durch den die jeweilige Phase U, V, W mit einem vom ersten unterschiedlichen, zweiten Pol V_{SS} der Zwischenkreisspannung U_{Z} bzw. Spannungsquelle V₁ (mit einem vom ersten unterschiedlichen, zweiten Potenzial) koppelbar ist.

Die Motorsteuerung 40 kann den Wechselrichter 41 mit einer Pulsweitenmodulation (PWM) ansteuern bzw. betreiben, um die Spulen 11 mit Energie zu versorgen.

Bei dem Ausgang der Power-Factor-Correction-Schaltung 42, die die Zwischenkreisspannung U_{Z} bereitstellt, bzw. Spannungsquelle V₁ handelt es sich vorzugsweise um eine Gleichspannungsquelle bzw. Gleichstromquelle.

Bei den Leistungsschaltern S₁ - S₆ handelt es sich vorzugsweise um Transistoren wie IGBTs oder MOSFETs, Thyristoren oder sonstige Halbleiterschalter. Diese weisen vorzugsweise in Sperrrichtung (in Bezug auf die Versorgungsspannung zwischen den Polen V_{DD}, V_{SS}) geschaltete Freilaufdioden D₁- D₆ auf, die durch Substratdioden/Bulkdioden realisiert sein können. Es können jedoch auch andere (Halbleiter-) Leistungsschalter eingesetzt werden.

Bei einer nicht dargestellten, alternativen Dreieckverschaltung der Spulen 11 liegt die Wicklungsinduktivität L₁ zwischen Phase U und Phase V, die Wicklungsinduktivität L₂ zwischen Phase V und Phase W und die Wicklungsinduktivität L₃ zwischen Phase W und Phase U. Sind mehr Phasen U, V, W vorgesehen, weist der Wechselrichter 41 vorzugsweise eine entsprechende Anzahl von Leistungsschalterpaaren S₁+S₂, S₃+S₄, S₅+S₆ auf.

Im normalen Betrieb werden die Schalter durch die Motorsteuerung 40 so angesteuert, dass der Rotor 20 in Drehung versetzt, also angetrieben wird. Hierzu werden die Motorwicklungen L₁, L₂, L₃ über die Leistungsschalter S₁ - S₆ so verschaltet, dass Ströme über die Phasen durch eine oder mehrere der Motorwicklungen L₁, L₂, L₃ fließen, wobei die Ströme I_{U}, I_{V}, I_{W} durch die Spannungsversorgung 112 bzw. Spannungsquelle V1 bereitgestellt werden.

Die Motorsteuerung 40 ist zur Ansteuerung der Leistungsschalterpaare S₁+S₂, S₃+S₄, S₅+S₆ ausgebildet, vorzugsweise so, dass sich ein Drehfeld ergibt bzw. der Rotor 20 angetrieben wird.

Die Phasenströme I_{U}, I_{V}, I_{W} werden durch die Motorsteuerung 40 vorzugsweise mit dem Sensorsignal 43 synchronisiert und/oder derart geregelt, dass vorgegebene oder vorgebbare Betriebsparameter des Elektromotors 1, wie eine Drehzahl, ein Drehmoment oder eine Position, angefahren oder erreicht werden.

Vorschlagsgemäß wird in einem besonderen Bremsbetriebsmodus der Rotor 20 gebremst - im Folgenden Kurzschlussbremsung genannt - indem die Motorsteuerung 40, insbesondere bei Empfang eines Bremstriggersignals B, die Phasen U, V, W miteinander kurzschließt - im Folgenden Phasenkurzschluss genannt.

Hierzu kann die Motorsteuerung 40 bei Empfang des Bremstriggersignals B die Phasen U, V, W miteinander kurzschließen, indem die Motorsteuerung 40 die Phasen U, V, W über Schalter S₁-S₆ mit einem gemeinsamen Knoten V_{DD}, V_{SS}, insbesondere entsprechende der Schalter S₂, S₄, S₆ einem Masseknoten V_{SS}, oder dem Knoten einer insbesondere negativen Versorgungsspannung, insbesondere der Zwischenkreisspannung U_{Z} bzw. Spannungsquelle V₁, verbindet.

Die Motorsteuerung 40 kann bei Empfang des Bremstriggersignals B die Phasen U, V, W kurzschließen, indem sie den Wechselrichter 41, an den die Phasen U, V, W angeschlossen sind, so ansteuert, dass nur Schalter S₁-S₆ des Wechselrichtes 41 zu genau einem gemeinsamen Knoten V_{DD}, V_{SS} geschlossen werden.

Querströme werden also vorzugsweise unterbunden und die Bremswirkung (nur) dadurch erzeugt, dass der Elektromotor 1 in einem Generatorbetrieb Ströme I_{U}, I_{V}, I_{W} erzeugt, die aufgrund des Kurzschlusses der Phasen U, V, W, insbesondere durch Widerstandsverluste in den Spulen 11, in Shunts R_{U}, R_{V}, R_{W} (zur Messung von Phasen- bzw. Strangströmen) und/oder in den Schaltern S₁-S₆, selbst in Wärme umgesetzt werden.

Die Primärwirkung des Kurzschlusses der Phasen U, V, W ist die Umwandlung kinetischer in elektrische Energie (drehender Rotor 20, Elektromotor 1 im Generatorbetrieb) und dann in Wärmeenergie (Verlustleistung durch sich dadurch einstellenden Stromfluss) innerhalb des Elektromotors 1.

Obwohl bevorzugt lediglich intrinsische parasitäre Verluste des Elektromotors 1 und des Wechselrichters 41 für die Bremswirkung ursächlich sind, kann in überraschender Weise - insbesondere aufgrund der durch den Kurzschluss entstehenden, kurzzeitig relativ hohen Phasenströme I_{U}, I_{V}, I_{W} - eine unerwartet gute Bremswirkung erreicht werden.

Zudem hat sich - in ebenfalls überraschender Weise - herausgestellt, dass die Kurzschlussströme (insbesondere Phasenströme I_{U}, I_{V}, I_{W} bei Phasenkurzschluss) die Motorphysik und insbesondere die Magnetisierung der Permanentmagnete 21, jedenfalls unter üblichen Betriebsbedingungen wie Raumtemperatur, nicht beeinträchtigen.

Das vorschlagsgemäße Verfahren kann eine Sicherheitsmaßnahme, insbesondere Aktivierung des Phasenkurzschlusses zur Sicherheitsbremsung und/oder eine Einschränkung des Betriebsbereichs des Elektromotors 1, wenn der Phasenkurzschluss nicht zur Verfügung steht oder zu dauerhaften Beeinträchtigungen wie einer Entmagnetisierung führen könnte, umfassen.

In einem weiteren Aspekt der vorliegenden Erfindung kann die Erzeugung des Bremstriggersignals B und/oder der Betrieb der Küchenmaschine 100 in einem Betriebsbereich, beispielsweise bei hohen Drehzahlen des Elektromotors 1, unterbunden werden, wenn bestimmte Randbedingungen vorliegen, insbesondere Randbedingungen die einem Phasenkurzschluss entgegenstehen.

Eine Randbedingung, die einem Phasenkurzschluss entgegenstehen kann, kann eine Gerätetemperatur oder Permanentmagnettemperatur außerhalb eines bestimmten Bereichs sein, beispielsweise wenn das Küchengerät 100 bzw. die Permanentmagnete 21 zu warm oder zu kalt ist/sind.

Beispielsweise kann bei einer Temperatur des Küchengeräts 100 bzw. der Permanentmagnete 21 unter einer Temperaturschwelle von beispielsweise 10 °C oder 0 °C und/oder über einer Temperaturschwelle von 50 °C oder 60 °C die Erzeugung des Bremstriggersignals B verhindert werden.

Besonders bevorzugt kann dann, wenn durch die bei dem Phasenkurzschluss kurzzeitig entstehenden hohen Phasenströme I_{U}, I_{V}, I_{W} unter bestimmten Bedingungen wie bei niedriegen oder hohen Magnettemperaturen, eine Beeinträchtigung der Magnetisierung der Permanentmagnete 21, der Schalter S₁-S₆ oder sonstiger Komponenten nicht auszuschließen ist/sind, die Erzeugung des Bremstriggersignals B und/oder der Betrieb der Küchenmaschine 100 in einem Betriebsbereich, beispielsweise bei hohen Drehzahlen des Elektromotors 1, unterbunden werden.

Beispielsweise wird eine Temperatur oder ein sonstiger Zustandsparameter der Küchenmaschine 100, insbesondere des Elektromotors 1, überwacht. Sofern die Temperatur oder der sonstige Zustandsparameter einen Schwellwert oder ein sonstiges Kriterium erreicht, überschreitet oder unterschreitet, kann die Erzeugung des Bremstriggersignals B bzw. die Bremsung mittels Kurzschlusses der Phasen U, V, W verhindert werden.

Insbesondere kann also die Erzeugung des Bremstriggersignals B bzw. die Bremsung mittels des Kurzschlusses der Phasen U, V, W bei zu hohen oder zu niedrigen Temperaturen der Küchenmaschine 100 bzw. des Elektromotors 1 unterbunden werden. Hierdurch wird verhindert, dass die Permanentmagnete 21 des Elektromotors 1 unter hohen Feldstärken teilweise entmagnetisiert werden. Denn das Risiko einer Entmagnetisierung ist grundsätzlich erhöht, wenn kalte (Ferrit-) Permanentmagnete elektromagnetisch belastet werden.

Wenn die Erzeugung des Bremstriggersignals B verhindert wird, ist bevorzugt, dass Betriebsmodi der Küchenmaschine 100 eingeschränkt sind oder werden, bis eine Erzeugung des Bremstriggersignals B bzw. die Kurzschlussbremsung wieder möglich ist, also die Temperatur oder der sonstige Zustandsparameter den Schwellwert oder ein sonstiges Kriterium nicht mehr erreicht, überschreitet oder unterschreitet - insbesondere also, wenn der Elektromotor 1 eine ausreichend hohe Temperatur aufweist.

Die Einschränkung kann darin bestehen, dass die Küchenmaschine 100 zeitweise nicht betriebsbereit ist, also Antriebs- und/oder Heizfunktionen außer Betrieb gesetzt oder eingeschränkt werden, beispielsweise durch Beschränkung der Drehzahl des Elektromotors und/oder durch Beschränkung der Heizleistung.

Ein weiterer, auch unabhängig realisierbarer Aspekt der vorliegenden Erfindung betrifft eine Verwendung der Bremsung durch den Phasenkurzschluss bzw. die Erzeugung des Bremstriggersignals B in Abhängigkeit von einem Vorhandensein oder einer Bauform eines Zubereitungsgefäßes 120. Alternativ oder zusätzlich erfolgt eine Verwendung der Bremsung durch den Phasenkurzschluss bzw. die Erzeugung des Bremstriggersignals B in Abhängigkeit vom Vorhandensein oder einer Erkennung eines Zubehörteils. Alternativ oder zusätzlich erfolgt eine Verwendung der Bremsung durch den Phasenkurzschluss bzw. die Erzeugung des Bremstriggersignals B in Abhängigkeit vom Vorhandensein und/oder von einer Aktivität eines Funktionsmoduls der Küchenmaschine100.

Vorzugsweise hängt die Erzeugung des Bremstriggersignals B von einer Gerätekonfiguration der Küchenmaschine 100 ab, insbesondere, wenn die Gerätekonfiguration einer Bremsung durch den Phasenkurzschluss entgegensteht und/oder wenn bei einer Gerätekonfiguration die Bremsung durch den Phasenkurzschluss besonders vorteilhaft ist.

So ist es möglich, dass die Erzeugung des Bremstriggersignals B von der Art des Zubereitungsgefäßes 120 oder eines anderen Funktionsmoduls der Küchenmaschine 100 oder vom Betrieb eines Zubehörteils, insbesondere im Zusammenhang mit dem Zubereitungsgefäß, abhängig erfolgt oder unterbunden wird.

Es kann z.B. Zubehörteile oder Funktionsmodule geben, bei denen die Kurzschlussbremse erwünscht oder eben nicht erwünscht ist. Das Funktionsmodul bzw. Zubehörteil kann (automatisch bzw. durch die Küchenmaschine 100) erkannt werden und/oder über ein Eingabefeld der Küchenmaschine 100 mitgeteilt werden.

Grundsätzlich kann es vorgesehen sein, dass der Phasenkurzschluss ein- und ausschaltbar ist. Dies ist vorzugsweise auch dann möglich, falls ein Zubehörteil nicht erkannt wird. Beispielsweise kann zur Verwendung des Zubehörteils die Bremsung durch den Phasenkurzschluss bzw. die Erzeugung des Bremstriggersignals ein- bzw. ausgeschaltet werden. Hierzu kann über die Benutzerschnittstelle 113 ein verwendetes Zubehörteil eingegeben werden und basierend hierauf kann die Erzeugung des Bremstriggersignals B ermöglicht oder verhindert werden. Weiter kann die Funktion der Küchenmaschine 100 angepasst sein oder werden, wenn die Erzeugung des Bremstriggersignals B oder die Bremsung durch den Phasenkurzschluss verhindert wird. Beispielsweise kann die Motordrehzahl limitiert werden.

Die Küchenmaschine 100 kann eine Sicherungseinrichtung 114 aufweisen, mit der eine Position einer bevorzugt nicht gegen Entfernen gesicherten Abdeckung 115 oder eines Vorhandenseins bzw. einer korrekten Position des Zubereitungsgefäßes 120 überwacht wird. Bei Erkennung einer Anomalie, insbesondere einer Bewegung oder Fehlpositionierung der Abdeckung 115 oder einer Entsicherung, Fehlpositionierung, Positionsänderung oder einem Nicht-Vorhandenseins des Zubereitungsgefäßes 120, kann das Bremstriggersignal B automatisch erzeugt werden, sodass die Motorsteuerung 40 den Kurzschluss der Phasen U, V, W bewirkt.

Bisweilen war es notwendig, bei hohen Drehzahlen des Werkzeugs 121 einen Deckel sicherheitshalber gegen Abnehmen oder Anheben zu verriegeln und die Entriegelung erst dann zu bewirken, wenn die Drehzahl des Werkzeugs 121 gering genug ist, also insbesondere eine gewisse Schwelle unterschreitet.

In vorteilhafter Weise kann bei Implementierung der vorliegenden Erfindung von einer derartigen Sicherung abgesehen werden, denn die vorschlagsgemäße Bremsung durch den Kurzschluss der Phasen U, V, W hat sich in überraschender Weise als so effektiv erwiesen, dass eine Bremsung des Rotors 20 nach Detektion einer Bewegung der Abdeckung 115 oder Entsicherung des Zubereitungsgefäßes 120 ausreicht, die Drehzahl ausreichend verringert zu haben, bevor ein Kontakt mit dem Werkzeug 121 möglich wird oder ist.

Insbesondere bei einer Bremsung, bei der das Bremstriggersignal B durch die Sicherungseinrichtung 114 erzeugt wird, wird der Kurzschluss vorzugsweise bis zum vollständigen Stillstand des Rotors 20 bewirkt.

Bei Empfang des Bremstriggersignals B schließt die Motorsteuerung 40 bei dem Kurzschluss der Phasen U, V, W vorzugsweise:
entweder ausschließlich die Schalter S₁, S₃, S₅ des Wechselrichters 41 zwischen den Phasen U, V, W und einem gemeinsamen Versorgungsspannungsknoten V_{DD} (elektrisch leitender Zustand), während die übrigen der Schalter S₂, S₄, S₆ des Wechselrichters 41 geöffnet bleiben (elektrisch isolierender Zustand),
oder ausschließlich die Schalter S₂, S₄, S₆ des Wechselrichters 41 zwischen den Phasen U, V, W und einem gemeinsamen Masseknoten V_{SS} (elektrisch leitender Zustand), während die übrigen der Schalter S₁, S₃, S₅ des Wechselrichters 41 geöffnet bleiben (elektrisch isolierender Zustand).

Dies verhindert Querströme und damit jede Energieversorgung, während der Elektromotor 1 im Generatorbetrieb kinetische Energie drehender Teile (Rotor 20, Welle 23, Werkzeug 121) in Strom und letztlich Wärme wandelt.

Alternativ oder zusätzlich können andere Schalter vorgesehen sein oder werden, um die Phasen U, V, W unabhängig von den Masse- bzw. Versorgungsspannungsknoten V_{DD}, V_{SS} kurzzuschließen (nicht dargestellt), also insbesondere mit Schaltern, die nicht für die Funktion der Wechselrichtung erforderlich oder vorgesehen sind.

Das Bremstriggersignal B kann in einem Aspekt der vorliegenden Erfindung derart kurzzeitig an die Motorsteuerung 40 gesendet werden, dass durch den entsprechend kurzzeitigen Kurzschluss der Phasen U, V, W nur eine teilweise Abbremsung des Rotors 20 erfolgt.

Dabei kann das Bremstriggersignal B über einen zeitlichen Verlauf mit Unterbrechungen mehrfach erzeugt bzw. an die Motorsteuerung 40 gesendet werden. Hierdurch ist ein sukzessives Abbremsen möglich, wie es für bestimme Vorgänge im Verarbeitungsprozess und/oder zum Schutz der Integrität des Elektromotors 1 vorteilhaft sein kann.

Durch mehrfaches, kurzzeitiges Erzeugen des Bremstriggersignals B kann also ein stufenweises, gepulstes, zeitlich verzögertes und/oder über die Zeit veränderliches Abbremsen des Rotors 20 erfolgen.

Alternativ oder zusätzlich ist es möglich, dass das Bremstriggersignal B in Abhängigkeit von der Drehzahl des Rotors 20 an die Motorsteuerung 40 gesendet wird. Es ist beispielsweise bevorzugt, dass das Bremstriggersignal nur bei Überschreiten einer Mindestdrehzahl des Rotors 20 an die Motorsteuerung 40 gesendet wird.

Das Bremstriggersignal kann also bevorzugt bei höchsten eingestellten Drehzahlen eingeleitet (z.B. bei über 5000 U/Min, 8000 U/Min oder 10.000 U/Min) oder bei Unterschreiten dieser Drehzahlen vermieden werden.

In einem Intervallbetrieb des Elektromotors 1, also ein Betrieb mit einem Timer, wird der Phasenkurzschluss vorzugsweise nicht verwendet, da der Betrieb durch den Timer getriggert in der Regel kein starkes Bremsen erfordert. Beispielsweise kann bei Programmen oder Rezepten zur Verarbeitung von Teig der Elektromotor 1 im Intervallbetrieb angesteuert werden. Der Elektromotor 1 wird also regelmäßig abgeschaltet, indem der Motorsteuerung 40 die Drehzahl "null" oder dergleichen vorgegeben wird, woraufhin die Motorsteuerung 40 eine Abbremsung ohne Kurzschluss der Phasen U, V, W bewirkt, die langsamer erfolgt, als mit Kurzschluss der Phasen U, V, W.

In einem Intervallbetrieb des Elektromotors 1, kann hingegen eine Abbremsung mit Phasenkurzschluss stattfinden, wenn hohe Drehzahlen oder Drehzahlschwankungen gewünscht sind - beispielsweise bei Intervallen von weniger als 5 Sekunden Antrieb und/oder weniger als 10 Sekunden Pause und/oder Soll-Drehzahlen, die über 5000 U/Min bzw. über 30 % oder 50 % des Gesamt-Drehzahlbereichs hinausgehen.

Das Bremstriggersignal B kann im zeitlichen Ablauf eines Programms oder Rezepts erzeugt werden, mit dem die Küchenmaschine 100, insbesondere der Elektromotor 1 und/oder eine Heizung der Küchenmaschine 100, gesteuert wird. So kann es beispielsweise vorgesehen sein, dass im Verlauf eines mittels der Benutzerschnittstelle 113 geführten Bearbeitungsvorgangs mit der Küchenmaschine 100 eine Zutat 140 in das Zubereitungsgefäß 120 ergänzend eingebracht werden muss. Hierbei kann es zeiteffizienter, sicherer und/oder komfortabler sein, mit dem Phasenkurschluss den Rotor 20 bzw. das Werkzeug 121 vorher schnell abzubremsen.

Alternativ oder zusätzlich kann das Bremstriggersignal B in Abhängigkeit von Zutaten 140 an die Motorsteuerung 40 gesendet werden, die - insbesondere als Teil eines Programms oder Rezepts - mit der Küchenmaschine 100 verarbeitet werden. Es ist möglich, dass bestimmte Zutaten 140 nur kurz bei bestimmten Drehzahlen bearbeitet werden sollen, insbesondere wenn eine inhomogene Konsistenz erzeugt werden soll. Hier hat sich das vorschlagsgemäße Abbremsen für eine exakte, präzise Steuerung als vorteilhaft erwiesen.

Das Bremstriggersignal B kann von einem aktivierten Modus von mehreren Modi der Küchenmaschine 100 abhängig erzeugt bzw. an die Motorsteuerung 40 gesendet werden. Hierbei sind die Modi durch unterschiedliche Sollwerte für Drehzahlen, Drehmomente und/oder Regeldynamiken zur unterschiedlich trägen Regelung des Elektromotors 1 charakterisiert. Beispielsweise kann bei einem Modus mit hoher Dynamik, also einer Regelcharakteristik der Motorsteuerung 40 mit Drehmomentänderungen höherer Gradienten die Erzeugung des Bremstriggersignals B erfolgen, während bei einem Modus mit geringerer Dynamik, also mit einer Regelcharakteristik der Motorsteuereung 40 mit Drehmomentänderungen mit im Vergleich geringeren Gradienten die Erzeugung des Bremstriggersignals B vermieden werden.

Die Basisstation 110 weist vorzugsweise eine Aufnahme 111 auf, um das Zubereitungsgefäß 120 zumindest teilweise und/oder bodenseitig aufzunehmen. Besonders bevorzugt ist das Zubereitungsgefäß 120 zumindest teilweise in die Basisstation 110 einsetzbar oder einhängbar, um das Zubereitungsgefäß 120 mechanisch und/oder elektrisch mit der Basisstation 110 zu verbinden. Bevorzugt ist das Zubereitungsgefäß 120 auf die Basisstation 110 aufsetzbar.

Das Zubereitungsgefäß 120 ist mit einem Werkzeug 121 ausgestattet, insbesondere um Zutaten 140 im Zubereitungsgefäß 120 zu zerkleinern und/oder zu mischen. Das Werkzeug 121 ist vorzugsweise am Boden des Zubereitungsgefäßes 120 angeordnet bzw. drehbar gelagert. Das Werkzeug 121 weist vorzugsweise mehrere, insbesondere austauschbare, Rührblätter auf.

Die Küchenmaschine 1 kann insbesondere an der Basisstation 110 eine Benutzerschnittstelle 113 aufweisen. Mit der Benutzerschnittstelle 113 können Eingaben getätigt werden, die die Motorsteuerung 40 dazu zu konfigurieren, den Elektromotor 1 in einer bestimmten Art und Weise zu betreiben.

Insbesondere können über die Benutzerschnittstelle 113 der Motorsteuerung 40 eine Drehzahl, ein periodisches Drehzahlprofil wie ein Pulsbetrieb, allgemeiner gesprochen ein Drehzahl- bzw. Drehmomentverlauf mit über der Zeit variierenden Werten und/oder ein Rezept mit entsprechenden Angaben vorgegeben oder dazu ausgebildet sein.

Die Benutzerschnittstelle 113 kann dabei die Motorsteuerung 40 so konfigurieren, dass die Motorsteuerung 40 mit dem Wechselrichter 41 Phasenstrom- bzw. Phasenspannungsverläufe der Phasen U, V, W erzeugt, um den Elektromotor 1 entsprechend zu regeln.

In einem Aspekt der vorliegenden Erfindung kann über die Benutzerschnittstelle 113 ein Bremstriggersignal B manuell erzeugt werden, beispielsweise mittels Aktivierung eines Notstopp-Bedienelements der Benutzerschnittstelle 113.

Insgesamt kann das Bremstriggersignal B über die Benutzerschnittstelle 113 der Küchenmaschine 1 oder automatisch im Verlauf eines Rezepts oder Programms ein anderer der Modi aktiviert werden, wobei das Bremstriggersignal B in Abhängigkeit von dem aktiven der Modi zu unterschiedlichen Zeiten oder bei Vorliegen unterschiedlicher Kriterien erzeugt oder an die Motorsteuerung 40 gesendet wird.

Der vorschlagsgemäßen Motorsteuerung 40 kann ein veränderbarer Dynamikparameter vorgegeben werden. Hierzu weist die Motorsteuerung 40 vorzugsweise einen Dynamikparametereingang auf. Über den Dynamikparametereingang kann der Motorsteuerung 40 der Dynamikparameter vorgegeben werden, der Einfluss auf das Regelverhalten der Motorsteuerung 40 hat.

Vorgesehen ist hierbei, dass durch Änderung des Dynamikparameters das Regelverhalten der Motorsteuerung 40 geändert wird. Die Motorsteuerung 40 ist vorzugweise dazu ausgebildet, dass sich durch Änderung des Dynamikparameters sein durch eine Änderung einer Last oder eines Sollwerts für einen Betriebsparameter des Elektromotors 1 hervorrufbares Regelverhalten ändert.

Der Betriebsparameter repräsentiert eine Betriebseigenschaft des Elektromotors 1, ganz besonders bevorzugt seine Rotordrehzahl, sein Rotordrehmoment und/oder seine Rotorposition (Drehlage). Alternativ oder zusätzlich kann der Betriebsparameter auch eine andere Betriebseigenschaft des Elektromotors 1 repräsentieren, die vorzugsweise in unmittelbarem Zusammenhang mit der Rotorbewegung bzw. Abgabe mechanischer Energie mittels des Rotors 20 steht.

Die Motorsteuerung 40 ist vorzugweise dazu ausgebildet, dass durch Änderung des Dynamikparameters die Nachregelung mindestens eines Betriebsparameterwerts des Elektromotors 1 ermöglicht wird. Der Betriebsparameterwert korrespondiert vorzugsweise zu einer Stellgröße des Elektromotors 1, insbesondere zu einem oder mehreren Phasenströmen I_{U}, I_{V}, I_{W}, zum Antrieb des Elektromotors 1.

Die Motorsteuerung 40 ist dabei vorzugsweise dazu ausgebildet, den Betriebsparameterwert in Abhängigkeit von dem Dynamikparameter unterschiedlich schnell bzw. mit unterschiedlicher Regelgeschwindigkeit nachzuregeln. Hierbei kann die unterschiedlich schnelle Nachregelung mittels eines durch den Dynamikparameter veränderten Verstärkungsfaktors in einer Übertragungsfunktion die Motorsteuerung 40 realisiert werden oder sein.

Die Motorsteuerung 40 kann also aufgrund einer Änderung des Dynamikparameters den Betriebsparameter seinem Sollwert schneller oder langsamer annähern.

Insbesondere gibt der Dynamikparameter eine Rotor-Drehmoment-Änderungs-Charakteristik vor. Mit anderen Worten gibt der Dynamikparameter vor, in welcher Art und Weise (Charakteristik) und insbesondere mit welcher Geschwindigkeit die Motorsteuerung 40 eine Änderung des Rotor-Drehmoments, also des Drehmoments des Rotors des Elektromotors 1, bewirkt.

In Abhängigkeit vom Dynamikparameter ergibt sich also, insbesondere beim Anlaufverhalten, bei Lastwechseln oder bei Änderung einer Betriebszustandsvorgabe und insbesondere einer Drehzahlvorgabe, eine veränderte Änderungsrate bzw. Änderungsgeschwindigkeit des Rotor-Drehmoments.

Das Bremstriggersignal B kann in Abhängigkeit vom Dynamikparameter gebildet oder verhindert werden. So ist es möglich, insbesondere im Ablauf von Rezepten, Programmen oder bei manuellem Eingriff in Abhängigkeit von dem Dynamikparameter zu entscheiden, ob ein Bremstriggersignal B erzeugt wird oder nicht. Beispielsweise kann bei aktivem Dynamikparameter für eine trägere Regelung das Bremstriggersignal B verhindert werden, während bei aktivem Dynamikparameter für eine im Vergleich weniger träge Regelung das Bremstriggersignal B bei sonst unveränderten Bedingungen erzeugt wird.

Ein weiterer Aspekt der vorliegenden Erfindung, der auch unabhängig von anderen Aspekten der vorliegenden Erfindung realisiert werden kann, betrifft ein Computerprogrammprodukt und/oder computerlesbare Speichermittel aufweisend Befehle, die bei Ausführung bewirken, dass die vorschlagsgemäße Küchenmaschine 100 das Verfahren nach einem der Aspekte der vorliegenden Erfindung ausführt, insbesondere, dass der Betrieb des Elektromotors 1 der Küchenmaschine 100 gemäß dem vorschlagsgemäßen Verfahren erfolgt.

Zusammenfassend haben sich folgende Aspekte der vorliegenden Erfindung als besonders vorteilhaft erwiesen, diese Aspekte sind getrennt voneinander realisierbar und in unterschiedlichen Kombinationen besonders vorteilhaft:
- Die Abbremsung durch den Phasenkurzschluss in Kombination mit der dreisträngigen Synchronmaschine mit Permanentmagneten als Elektromotor 1 in einer Küchenmaschine 100 ist besonders effektiv.
- Die Abbremsung durch den Phasenkurzschluss wird vorzugsweise eingeleitet, wenn ein Timer des aktuellen Zubereitungsschrittes (Rezept, Guided Cooking, Freies Kochen, Mode) der Küchenmaschine 100 auf 0s abgelaufen ist.
- Das Abbremsen durch den Phasenkurzschluss kann grundsätzlich bei allen denkbaren Drehzahlen gleichermaßen stattfinden - insbesondere das Auslösen der Einleitung.
- Die Abbremsung durch den Phasenkurzschluss bei höchsten eingestellten Drehzahlen (beispielsweise der höchsten 20 % oder 30 % des Drehzahlspektrums) ist besonders vorteilhaft (z.B. in einem Turbomode oder einer höchsten Drehzahl-Stufe).
- In einem Intervallbetrieb der Küchenmaschine 100, insbesondere wenn ein Timer noch nicht auf 0s abgelaufen ist, wird die Abbremsung durch den Phasenkurzschluss vorzugsweise nicht verwendet. Hier wird bevorzugt der Betrieb wird durch den Timer getriggert. Beispielsweise ist ein Teigmodus der Küchenmaschine 100 zur Verarbeitung von Teig ein solcher Intervallbetrieb. Der Elektromotor 1 wird regelmäßig abgeschaltet, indem die Drehzahl des Elektromotors 1 "normal" herruntergeregelt wird, und läuft dann weiter ohne eine Abbremsung durch den Phasenkurzschluss.
- In einem Turbointervallbetrieb (Intervallbetrieb mit hohen Drehzahlen oder Drehzahlschwankungen, insbesondere über mehr als 50 % des verfügbaren Drehzahlbereichs) kann eine Abbremsung durch den Phasenkurzschluss stattfinden. Ein Beispiel hierfür ist ein Loop: 3x (2 Sekunden Turbo + 7 Sekunden Pause mit Phasenkurzschluss) - Ende.
- Ausgeschlossen wird oder ist die Abbremsung durch den Phasenkurzschluss vorzugsweise gerätetemperaturabhängig, insbesondere bei hohen oder niedrigen Gerätetemperaturen des Küchengeräts 100. Dies schützt beispielsweise die Permanentmagnete 21 vor Entmagnetisierung, denn es besteht ggf. ein Risiko einer Entmagnetisierung, wenn kalte Ferrit-Permanentmagnete 21 elektromagnetisch belastet werden.
- In vorteilhafter Weise kann die Küchenmaschine 100 frei von Bremschoppern, 4-Quadrantenstellern (rückspeisefähigen Gleichrichtern), und/oder Leistungselektronik, die Energie aus der Rotationsenergie des Motors in den Zwischenkreis zurückgespeist, realisiert oder betrieben werden, was ressourcenschonend, kostengünstig und robuster ist.
- Die Abbremsung durch den Phasenkurzschluss kann geschwindigkeitsabhängig, rezeptabhängig, modeabhängig, zubehörabhängig, gepulst und/oder mit Zeitverlauf möglich sein.

Einzelne Aspekte der vorliegenden Erfindung können getrennt voneinander und in unterschiedlichen Kombinationen realisiert sein und jeweils mit Vorteilen einhergehen, auch wenn dies nicht für jede Kombination explizit erwähnt und erläutert ist.

### Bezugszeichenliste:

- 1: Elektromotor

- 10: Stator
- 11: Spule
- 12: Statorkern
- 12A: Statorblech
- 13: Spulenträger
- 14: Anschlusseinrichtung
- 14A: Kontakt/Klemme
- 14B: Sternpunkt
- 15: Statorschlitz

- 20: Rotor
- 21: Permanentmagnet
- 22: Rotorkern
- 22A: Rotorblech
- 22B: Sektorabschnitt
- 23: Welle

- 30: Lüfter

- 40: Motorsteuerung
- 41: Wechselrichter
- 42: Power-Factor-Correction-Schaltung
- 43: Sensorsignal

- 100: Küchenmaschine
- 110: Basisstation
- 111: Aufnahme
- 112: Spannungsversorgung
- 113: Benutzerschnittstelle
- 114: Sicherungseinrichtung
- 115: Abdeckung

- 120: Zubereitungsgefäß
- 121: Werkzeug (Rührer/Messer)
- 140: Zutaten

- A: Rotationsachse
- B: Bremstriggersignal
- D₁: Freilaufdiode
- D₂: Freilaudiode
- D₃: Freilaufdiode
- D₄: Freilaufdiode
- D₅: Freilaufdiode
- D₆: Freilaufdiode
- S₁: Schalter
- S₂: Schalter
- S₃: Schalter
- S₄: Schalter
- S₅: Schalter
- S₆: Schalter
- V_{DD}: Versorgungsspannungsknoten
- V_{SS}: Masseknoten
- V₁: Spannungsquelle
- U_{Z}: Zwischenkreisspannung
- U: Phase
- V: Phase
- W: Phase

- I_{U}: Phasenstrom Phase U
- I_{V}: Phasenstrom Phase V
- I_{W}: Phasenstrom Phase W

- U_{U}: Phasenspannung Phase U
- U_{V}: Phasenspannung Phase V
- U_{W}: Phasenspannung Phase W

- L₁: Wicklungsinduktivität
- L₂: Wicklungsinduktivität
- L₃: Wicklungsinduktivität

- R_{U}: Shunt Phase U
- R_{V}: Shunt Phase V
- R_{W}: Shunt Phase W

## Patentansprüche

1. Verfahren zum Betrieb eines Elektromotors (1) einer Küchenmaschine (100), vorzugsweise eines Drehfeldmotors, insbesondere eines BLDC oder elektrisch kommutierten Synchronmotors, wobei ein Rotor (20) des Elektromotors (1) zum Antrieb eines Werkzeugs (121) der Küchenmaschine (100) mit diesem Werkzeug (121) gekoppelt ist, um es in Rotation zu versetzen, und wobei der Elektromotor (1) mindestens drei Phasen (U, V, W) aufweist, durch die durch Spulen (11) gebildete Elektromagnete des Elektromotors (1) über eine Motorsteuerung (40) versorgbar sind, um den Rotor (20) anzutreiben,
**dadurch gekennzeichnet,**
**dass** der Rotor (20) gebremst wird, indem die Motorsteuerung (40) bei Empfang eines Bremstriggersignals (B) die Phasen (U, V, W) miteinander kurzschließt.

2. Verfahren nach Anspruch 1, **dadurch gekennzeichnet, dass** die Motorsteuerung (40) bei Empfang des Bremstriggersignals (B) die Phasen (U, V, W) miteinander kurzschließt, indem die Motorsteuerung (40) die Phasen (U, V, W) über Schalter (S₁ - S₆) mit einem gemeinsamen Knoten (V_{DD}, V_{SS}), insbesondere einem Masseknoten (V_{SS}) oder dem Knoten einer insbesondere negativen Versorgungsspannung verbindet.

3. Verfahren nach Anspruch 1 oder 2, **dadurch gekennzeichnet, dass** die Motorsteuerung (40) bei Empfang des Bremstriggersignals (B) die Phasen (U, V, W) kurzschließt, indem sie einen Wechselrichter (41), an den die Phasen (U, V, W) angeschlossen sind, so ansteuert, dass nur diejenigen Schalter (S₁, S₃, S₅, bzw. S₂, S₄, S₆) des Wechselrichters (41) zu genau einem gemeinsamen Knoten (V_{DD}, V_{SS}) geschlossen werden, insbesondere nur die Schalter (S₁, S₃, S₅) des Wechselrichters (41) zu dem gemeinsamen Versorgungsspannungsknoten (V_{DD}) oder nur die Schalter (S₂, S₄, S₆) des Wechselrichters (41) zu einem gemeinsamen Masseknoten bzw. Knoten einer negativen Versorgungsspannung (V_{SS}).

4. Verfahren nach einem der voranstehenden Ansprüche, **dadurch gekennzeichnet, dass** eine Sicherungseinrichtung (114) der Küchenmaschine (100) eine Position einer bevorzugt nicht gegen Entfernen gesicherten Abdeckung (115) und/oder Sicherung eines Zubereitungsgefäßes (120) und/oder ein Vorhandensein des Zubereitungsgefäßes (120) überwacht und bei Erkennung einer Anomalie, insbesondere einer Bewegung der Abdeckung (115) oder Entsicherung des Zubereitungsgefäßes (120), das Bremstriggersignal (B) automatisch erzeugt und an die Motorsteuerung (40) sendet, sodass diese den Kurzschluss der Phasen (U, V, W) bewirkt.

5. Verfahren nach einem der voranstehenden Ansprüche, **dadurch gekennzeichnet, dass** der Kurzschluss bis zum vollständigen Stillstand des Rotors (20) bewirkt wird.

6. Verfahren nach einem der voranstehenden Ansprüche, **dadurch gekennzeichnet, dass** das Bremstriggersignal (B) über einen zeitlichen Verlauf mehrfach an die Motorsteuerung (40) gesendet wird.

7. Verfahren nach einem der voranstehenden Ansprüche, **dadurch gekennzeichnet, dass** das Bremstriggersignal (B) derart kurzzeitig an die Motorsteuerung (40) gesendet wird, dass durch den entsprechend kurzzeitigen Kurzschluss der Phasen (U, V, W) nur eine teilweise Abbremsung des Rotors (20) erfolgt.

8. Verfahren nach einem der voranstehenden Ansprüche, **dadurch gekennzeichnet, dass** durch mehrfaches, kurzzeitiges Erzeugen des Bremstriggersignals (B) ein stufenweises, gepulstes, zeitlich verzögertes und/oder über die Zeit veränderliches Abbremsen des Rotors (20) erfolgt.

9. Verfahren nach einem der voranstehenden Ansprüche, **dadurch gekennzeichnet, dass** das Bremstriggersignal (B) in Abhängigkeit von der Drehzahl des Rotors (20) an die Motorsteuerung (40) gesendet wird, insbesondere wobei das Bremstriggersignal (B) nur bei Überschreiten einer Mindestdrehzahl des Rotors (20) an die Motorsteuerung (40) gesendet wird.

10. Verfahren nach einem der voranstehenden Ansprüche, **dadurch gekennzeichnet, dass** das Bremstriggersignal (B) im zeitlichen Ablauf eines Programms oder Rezepts erzeugt wird, mit dem die Küchenmaschine (100), insbesondere der Elektromotor (1) und/oder eine Heizung der Küchenmaschine (100), gesteuert wird.

11. Verfahren nach einem der voranstehenden Ansprüche, **dadurch gekennzeichnet, dass** das Bremstriggersignal (B) in Abhängigkeit von Zutaten (140) an die Motorsteuerung (40) gesendet wird, die - insbesondere als Teil eines Programms oder Rezepts - mit der Küchenmaschine (100) verarbeitet werden.

12. Verfahren nach einem der voranstehenden Ansprüche, **dadurch gekennzeichnet, dass** das Bremstriggersignal (B) von einem aktivierten von mehreren Modi der Küchenmaschine (100) abhängig an die Motorsteuerung (40) gesendet wird, vorzugsweise wobei die Modi durch unterschiedliche Sollwerte für Drehzahlen, Drehmomente und/oder Regeldynamiken zur unterschiedlich trägen Regelung des Elektromotors (1) charakterisiert sind, vorzugsweise wobei über eine Benutzerschnittstelle (113) der Küchenmaschine (100) oder automatisch im Verlauf eines Rezepts oder Programms ein anderer der Modi aktiviert wird, wobei das Bremstriggersignal (B) in Abhängigkeit von dem aktivierten der Modi zu unterschiedlichen Zeiten oder bei Vorliegen unterschiedlicher Kriterien an die Motorsteuerung (40) gesendet wird.

13. Verfahren nach einem der voranstehenden Ansprüche, **dadurch gekennzeichnet, dass** die Erzeugung des Bremstriggersignals (B) in Abhängigkeit von einem Vorhandensein oder einer Bauform eines Zubereitungsgefäßes (120) und/oder vom Vorhandensein oder einer Erkennung eines Zubehörteils und/oder vom Vorhandensein und/oder einer Aktivität eines Funktionsmoduls der Küchenmaschine (100) erfolgt.

14. Küchenmaschine (100) aufweisend einen Elektromotor (1), vorzugsweise einen Drehfeldmotor, insbesondere einen BLDC oder elektrisch kommutierten Synchronmotor, wobei ein Rotor (20) des Elektromotors (1) zum Antrieb eines Werkzeugs (121) der Küchenmaschine (100) mit diesem gekoppelt ist, um es in Rotation zu versetzen, und wobei der Elektromotor (1) mindestens drei Phasen (U, V, W) aufweist, durch die durch Spulen (11) gebildete Elektromagnete des Elektromotors (1) über eine Motorsteuerung (40) versorgbar sind, um den Rotor (20) anzutreiben, und wobei die Küchenmaschine (100) zur Durchführung eines Verfahrens nach einem der voranstehenden Ansprüche ausgebildet ist.

15. Computerprogrammprodukt aufweisend Befehle, die bei Ausführung bewirken, dass die Küchenmaschine (100) nach Anspruch 14 das Verfahren nach einem der Ansprüche 1 bis 13 ausführt.
